# EUROPÄISCHE PATENTSCHRIFT

(11) **EP 4 131 523 B1**
(45) Veröffentlichungstag und Bekanntmachung des Hinweises auf die Patenterteilung: **08.05.2024**
(21) Anmeldenummer: 22188018.0
(22) Anmeldetag: 01.08.2022
(51) Int. Cl.: H01M 8/0273, H01M 8/023, H01M 8/1004, H01M 8/18, H01M 8/10, H01M 8/0286, H01M 8/0284

(54) **GASDIFFUSIONSEINHEIT FÜR EINE BRENNSTOFFZELLE, MEMBRAN-ELEKTRODEN-EINHEIT FÜR EINE BRENNSTOFFZELLE UND ANORDNUNG FÜR EINE BRENNSTOFFZELLE**
GAS DIFFUSION UNIT FOR A FUEL CELL, MEMBRANE ELECTRODE UNIT FOR A FUEL CELL, AND ASSEMBLY FOR A FUEL CELL
UNITÉ DE DIFFUSION DE GAZ POUR UNE PILE À COMBUSTIBLE, UNITÉ DE MEMBRANE ET D'ÉLECTRODE POUR UNE PILE À COMBUSTIBLE ET AGENCEMENT POUR UNE PILE À COMBUSTIBLE

(30) Priorität: 03.08.2021 DE 102021120110
(43) Veröffentlichungstag der Anmeldung: 08.02.2023
(73) Patentinhaber: Carl Freudenberg KG, 69469 Weinheim (DE)
(72) Erfinder: EMIG, Jürgen, 64689 Grasellenbach (DE); KEMMERICH, Jan, 81827 München (DE); QUICK, Christian, 69469 Weinheim (DE)

(56) Entgegenhaltungen:
- EP-A1- 1 296 394
- KR-A- 20210 063 971
- US-A1- 2014 356 762

## Beschreibung

Die Erfindung betrifft eine Membran-Elektroden-Einheit für eine Brennstoffzelle mit einer Gasdiffusionseinheit, umfassend eine flächig ausgebildete Gasdiffusionsschicht, welche auf einem Trägersubstrat angeordnet ist, wobei auf zumindest einer Hauptseite des Trägersubstrats eine Dichtungsanordnung angeordnet ist, wobei ein Verbindungsabschnitt der Dichtungsanordnung der umlaufenden Kante der Gasdiffusionseinheit zugeordnet ist, wobei der Verbindungsabschnitt eine Dichtwulst ausbildet. Gasdiffusionseinheiten der eingangs genannten Art finden nicht nur in Brennstoffzellen Einsatz, sondern auch in vergleichbaren Anwendungen, beispielsweise in Elektrolyseuren oder Redox-Flow-Batterien.

Brennstoffzellen erzeugen elektrische Energie durch Oxidation eines Brennstoffes und bestehen zumeist aus mehreren stapelförmig übereinander angeordneten elektrisch leitenden Elektroden, die gasdurchlässig sind und die durch eine ionenleitende Membran voneinander getrennt sind. Die Zufuhr von Reaktionsmedien erfolgt über Bipolarplatten, welche mit Fluidkanälen versehen sind, wobei durch die Bipolarplatten ferner ein Kühlmedium geleitet werden kann, welches Reaktionswärme abführt. Für eine gezielte Lenkung der Reaktionsmedien und der Kühlmedien ist es dabei erforderlich, die Verteilstrukturen und Kanäle abzudichten.

Aus der EP 1 320 142 B1 ist es beispielsweise bekannt, ein Dichtelement vorzusehen, welches zwischen zwei Bipolarplatten angeordnet ist und welches die Bipolarplatten und die zwischen den Bipolarplatten angeordneten Gasdiffusionsschichten mit der Membran so abdichtet, dass die Reaktionsmedien über die Membran miteinander in Kontakt treten und dass die Kühlmedien in den dafür bestimmten Kanälen strömen.

Ein Stapelelement einer Brennstoffzelle umfasst zumeist zwei Bipolarplatten, zwischen denen eine Membran-Elektroden-Anordnung angeordnet ist. Eine Membran-Elektroden-Anordnung umfasst wiederum zwei Gasdiffusionslagen, zwischen denen eine katalysatorbeschichtete Membran angeordnet ist oder zwei Gasdiffusionselektroden zwischen denen die Membran angeordnet ist. Ein Brennstoffzellenstapel kann dabei mehr als 200 Anordnungen, umfassend jeweils zwei Bipolarplatten und eine Membran-Elektroden-Anordnung umfassen. Für eine hohe Funktionsfähigkeit ist es dabei erforderlich, die Komponenten der Anordnung lagerichtig zueinander zu montieren, wobei Leckagen von Reaktionsmedien vermieden werden sollen. Die Reaktionsmedien sollen ausschließlich im Bereich der Gasdiffusionsschichten und der katalysatorbeschichteten Membran miteinander reagieren.

Aus der US 2014/356762 A1 ist eine Gasdiffusionseinheit bekannt, bei der an eine Gasdiffusionsschicht ein Dichtkörper angebunden ist. Vergleichbare Ausgestaltungen zeigen die KR 10-2021-0063971 A und EP 1 296 394 A1.

Der Erfindung liegt die Aufgabe zugrunde, die Anordnung so weiterzuentwickeln, dass sich die Montage vereinfacht.

Diese Aufgabe wird mit den Merkmalen der Ansprüche 1 und 7 gelöst. Auf vorteilhafte Ausgestaltungen nehmen die jeweils darauf rückbezogenen Ansprüche Bezug.

Die erfindungsgemäße Membran-Elektroden-Einheit für eine Brennstoffzelle umfasst eine Gasdiffusionseinheit, eine weitere Gasdiffusionsschicht und eine katalysatorbeschichtete Membran, die zwischen Gasdiffusionseinheit und der weiteren Gasdiffusionsschicht angeordnet ist, wobei die weitere Gasdiffusionsschicht entlang der umlaufenden Kante mit einer weiteren Dichtwulst versehen ist, wobei die katalysatorbeschichtete Membran zwischen Gasdiffusionseinheit und der weiteren Gasdiffusionsschicht angeordnet ist und wobei die Dichtwulst des Verbindungsabschnitts und die weitere Dichtwulst der Gasdiffusionsschicht dichtend an der Membran anliegen.

Die Gasdiffusionseinheit umfasst eine flächig ausgebildete Gasdiffusionsschicht, welche auf einem Trägersubstrat angeordnet ist, wobei auf zumindest einer Hauptseite des Trägersubstrats eine Dichtungsanordnung angeordnet ist, wobei ein Verbindungsabschnitt der Dichtungsanordnung der umlaufenden Kante der Gasdiffusionsschicht zugeordnet ist, wobei der Verbindungsabschnitt eine Dichtwulst ausbildet, wobei der Verbindungsabschnitt die Gasdiffusionsschicht stoffschlüssig an dem Trägersubstrat fixiert.

Das Trägersubstrat ist mit einer Dichtungsanordnung versehen, welche auf einer oder vorzugsweise auf beiden Hauptseiten des Trägersubstrats angeordnet ist. Die Dichtungsanordnung kann dabei eine Abdichtung gegenüber den Bipolarplatten bewirken. Dadurch, dass die Dichtungsanordnung auf einem Trägersubstrat aufgebracht ist, ist es besonders einfach, die Dichtungsanordnung zwischen den Bipolarplatten zu platzieren. Dabei ist es beispielsweise nicht erforderlich, eine separat ausgebildete Dichtung manuell auf den Bipolarplatten anzubringen, was bislang mit einem besonders hohen manuellen Fertigungsaufwand einhergeht. Durch die Anordnung der Dichtungsanordnung auf einem Trägersubstrat ist die Dichtungsanordnung formstabil und kann besonders einfach lagerichtig einer Bipolarplatte zugeordnet werden.

Bei der erfindungsgemäßen Ausgestaltung ist die Gasdiffusionsschicht stoffschlüssig an dem Trägersubstrat fixiert. Dies erfolgt durch einen Bereich der Dichtungsanordnung, der einen Verbindungsabschnitt bildet. Der Verbindungsabschnitt bildet einerseits eine Dichtwulst aus, über die eine Abdichtung gegenüber angrenzenden Komponenten erfolgen kann, andererseits erfolgt durch den Verbindungsabschnitt eine Verbindung von Gasdiffusionsschicht und Trägersubstrat. Dadurch sind Gasdiffusionsschicht und Trägersubstrat verliersicher und stoffschlüssig miteinander verbunden. Hierbei ist besonders vorteilhaft, dass die Gasdiffusionsschicht lagerichtig auf dem Trägersubstrat fixiert ist, so dass die Montage der Membran, beispielsweise einer mit einem Katalysator beschichteten Polymerelektrolytmembran (CCM), innerhalb der Anordnung besonders einfach ist. Zur Herstellung einer Gasdiffusionseinheit kann ein Trägersubstrat bereitgestellt werden, auf welchem eine Gasdiffusionsschicht angeordnet wird. Anschließend wird die Dichtungsanordnung auf das Trägersubstrat aufgebracht, wobei das Dichtungsmaterial im Bereich der Kante der Gasdiffusionsschicht einen Verbindungsabschnitt ausbildet, durch den die Gasdiffusionsschicht stoffschlüssig an das Trägersubstrat angebunden wird. Das Dichtungsmaterial wird dabei so ausgeformt, dass sich zumindest eine Dichtwulst ausbildet Vorzugsweise ist das Trägersubstrat als Folie ausgebildet, wobei in die Folie Durchbrechungen eingebracht sind. Durch die Ausbildung als Folie ist das Trägersubstrat besonders dünn. Die Durchbrechungen ermöglichen einen ungehinderten Transport von Reaktionsmedien und auch von Kühlmedien durch das Trägersubstrat hindurch. Eine Durchbrechung ist insbesondere in den Bereich des Trägersubstrats eingebracht, in welchem die Gasdiffusionsschicht angeordnet ist. Dadurch ist ein ungehinderter Transport von Reaktionsmedium in Richtung der Membran möglich.

Vorzugsweise ist auf beiden Hauptseiten des Trägersubstrats eine Dichtungsanordnung angeordnet. Bei dieser Ausgestaltung ist zwischen zwei Bipolarplatten lediglich ein einziges Trägersubstrat erforderlich. Auf beiden Hauptseiten des Trägersubstrats befindet sich eine Dichtungsanordnung, welche jeweils zur Anlage an einer angrenzenden Bipolarplatte gelangt.

Die Dichtungsanordnung kann Dichtwulste aufweisen, welche Durchbrechungen umgeben und/oder der Kante des Trägersubstrats zugeordnet sind. Durch erste Durchbrechungen werden Reaktionsmedien geleitet und durch zweite Durchbrechungen Kühlmedien. Dadurch, dass die Dichtwulste die Durchbrechungen umgeben, können Leckagen vermieden werden. Eine der Kante des Trägersubstrats zugeordnete Dichtungsanordnung bewirkt eine Abdichtung der Anordnung mit zwei Bipolarplatten im Bereich der Kanten.

Das Trägersubstrat kann aus thermoplastischen Kunststoffen ausgebildet sein. Ein vorteilhafter Werkstoff für das Trägersubstrat ist dabei Polyethylennaphthalat (PEN). PEN ist ein durch Polykondensation hergestellter thermoplastischer Kunststoff aus der Familie der Polyester. PEN weist eine hohe Gasdichtigkeit, eine hohe Wärmeformbeständigkeit und eine hohe Chemikalien- und Hydrolysebeständigkeit auf. Dementsprechend ist PEN insbesondere für den Einsatz in Brennstoffzellen geeignet.

Die Dichtungsanordnung ist vorzugsweise aus spritzgießfähigem elastomerem Werkstoff ausgebildet. Das Aufbringen der Dichtungsanordnung kann bei dieser Ausgestaltung beispielsweise im Zuge des Spritzgießens erfolgen. Dabei ist es insbesondere denkbar, den Dichtungswerkstoff aus der Gruppe der Polyolefin-, Fluor- und Silikon-Elastomere auszuwählen.

Zur Herstellung der Membran-Elektroden-Einheit wird zunächst eine Gasdiffusionseinheit mit Trägersubstrat und Gasdiffusionsschicht bereitgestellt, wobei die Gasdiffusionsschicht stoffschlüssig an das Trägersubstrat angebunden ist. Die mit einem Katalysator beschichtete Membran wird so auf der Gasdiffusionsschicht angeordnet, dass der Verbindungsabschnitt dichtend an den Kanten der katalysatorbeschichteten Membran zur Anlage gelangt. Eine weitere Gasdiffusionsschicht deckt die katalysatorbeschichtete Membran ab, wobei die weitere Gasdiffusionsschicht eine weitere Dichtwulst aufweist, welche ebenfalls zur Anlage an der katalysatorbeschichteten Membran gelangt und auf der der Gasdiffusionseinheit gegenüberliegenden Seite die Membran im Bereich der Kanten abdichtet. Dadurch, dass die Gasdiffusionsschicht der Gasdiffusionseinheit auf einem Trägersubstrat fixiert ist, ist es besonders einfach, die Membran-Elektroden-Einheit herzustellen. Es ist insbesondere nicht erforderlich, die katalysatorbeschichtete Membran in der Membran-Elektroden-Einheit zu fixieren. Durch die Dichtwulst der beiden Gasdiffusionsschichten ist die Membran im Bereich der Kanten abgedichtet und lagerichtig fixiert. Dementsprechend ist es auch nicht erforderlich, die katalysatorbeschichtete Membran stoffschlüssig an eine oder beide Gasdiffusionsschichten anzubinden. Die katalysatorbeschichtete Membran kann lediglich zwischen den Gasdiffusionsschichten lose eingelegt werden.

Vorzugsweise weisen die Gasdiffusionsschicht und die weitere Gasdiffusionsschicht eine Matrix aus faserhaltigem Werkstoff auf. Faserhaltige Werkstoffe sind beispielsweise Gewebe, Papiere und Vliesstoffe. Vliesstoffe sind dabei bevorzugt, weil diese kostengünstig herstellbar sind und eine hohe Durchlässigkeit für Reaktionsmedien aufweisen. Des Weiteren können Vliesstoffe elektrisch leitfähig ausgerüstet werden.

Eine erfindungsgemäße Anordnung für eine Brennstoffzelle umfasst eine erfindungsgemäße Membran-Elektroden-Einheit, welche zwischen zwei Bipolarplatten angeordnet ist, wobei die Bipolarplatten in den den Gasdiffusionsschichten zugeordneten Bereichen eine Verteilstruktur aufweist und wobei in die Bipolarplatten Kanäle für Medientransport eingebracht sind.

Vorzugsweise ist auf beiden Hauptseiten des Trägersubstrat eine Dichtungsanordnung angeordnet, welche zur Abdichtung der Kanäle zur Anlage an den Bipolarplatten gelangt. Insofern bewirkt das Trägersubstrat mit den auf beiden Hauptseiten angeordneten Dichtungsanordnungen eine Abdichtung zwischen den Bipolarplatten und verhindert, dass Leckagen von Reaktionsmedien oder Kühlmedien entstehen.

Einige Ausgestaltungen der erfindungsgemäßen Gasdiffusionseinheit, Membran-Elektroden-Einheit und Anordnung werden nachfolgend anhand der Figuren näher erläutert. Diese zeigen, jeweils schematisch:
- Fig. 1: eine Gasdiffusionseinheit mit Trägersubstrat in der Draufsicht;
- Fig. 2: eine weitere Gasdiffusionsschicht;
- Fig. 3: eine Membran-Elektroden-Einheit im Schnitt;
- Fig. 4: eine Anordnung mit Bipolarplatten und Membran-Elektroden-Einheit als Explosionsdarstellung.

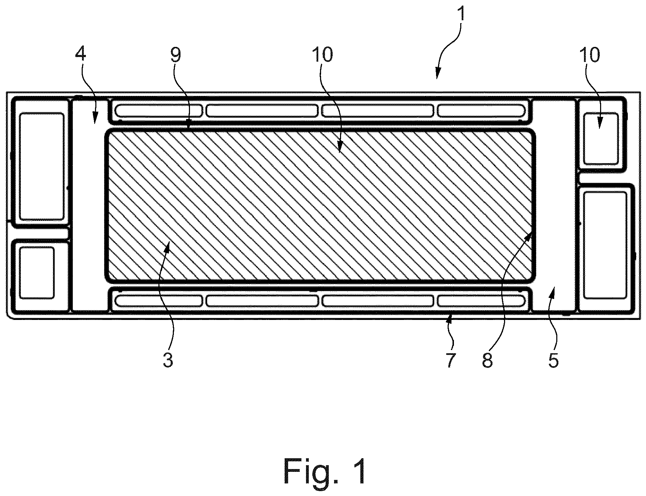

Figur 1 zeigt in der Draufsicht eine Gasdiffusionseinheit 1 für eine Brennstoffzelle. Die Gasdiffusionseinheit 1 umfasst eine flächig ausgebildete Gasdiffusionsschicht 3, bestehend aus einem elektrisch leitfähigen Vliesstoff. Die Gasdiffusionsschicht 3 ist auf einem Trägersubstrat 4 angeordnet. Das Trägersubstrat 4 ist als Folie ausgebildet und besteht bei der vorliegenden Ausgestaltung aus Polyethylennaphthalat (PEN). In die Folie sind Durchbrechungen 10 eingebracht.

Auf beiden Hauptseiten 5, 6 des Trägersubstrats 4 ist jeweils eine Dichtungsanordnung 7 angebracht. Dabei bildet die Dichtungsanordnung 7 auf einer Hauptseite 5 einen Verbindungsabschnitt 8, wobei der Verbindungsabschnitt der umlaufenden Kante 9 der Gasdiffusionsschicht 3 zugeordnet ist. Der Verbindungsabschnitt 8 bildet dementsprechend eine Dichtwulst aus und fixiert die Gasdiffusionsschicht 3 stoffschlüssig an dem Trägersubstrat 4.

Das Trägersubstrat 4 weist eine Durchbrechung 10 auf, welche der Gasdiffusionsschicht 3 zugeordnet ist und dem Transport von Transportmedien durch die Gasdiffusionsschicht 3 hindurch dient. Das Trägersubstrat 4 weist weitere Durchbrechungen 10 auf, welche dem Transport von Kühlmedien durch das Trägersubstrat 4 hindurch dienen. Die Dichtungsanordnung 7 weist eine Dichtwulst auf, welche die Durchbrechungen 10 umgeben. Eine weitere Dichtwulst ist der Kante des Trägersubstrats 4 zugeordnet. Die Dichtungsanordnung 7 ist aus spritzgießfähigem elastomerem Werkstoff ausgebildet. In dieser Ausgestaltung besteht die Dichtungsanordnung 7 aus einem Polyolefin-Elastomer.

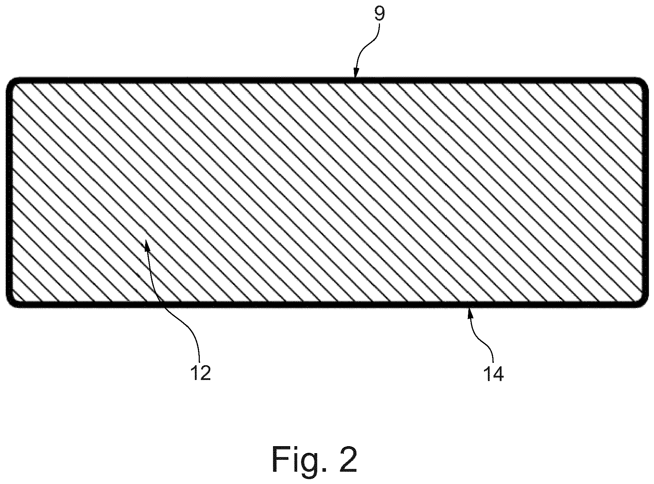

Figur 2 zeigt eine weitere Gasdiffusionsschicht 12. Die weitere Gasdiffusionsschicht 12 besteht aus einem flächig ausgebildeten, elektrisch leitfähig ausgerüsteten Vliesstoff und ist entlang der umlaufenden Kante 9 mit einer weiteren Dichtwulst 14 versehen.

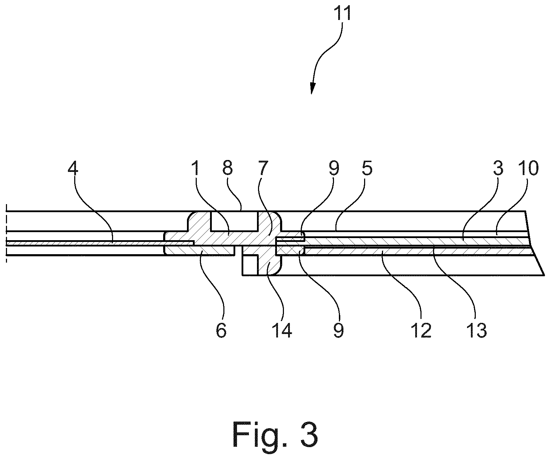

Figur 3 zeigt eine Membran-Elektroden-Einheit 11 für eine Brennstoffzelle, umfassend eine Gasdiffusionseinheit 1 gemäß Figur 1, und eine weitere Gasdiffusionsschicht 12 nach Figur 2. Zwischen der Gasdiffusionseinheit 1 und der weiteren Gasdiffusionsschicht 12 ist eine mit einem Katalysator beschichtete Membran 13 angeordnet. Die Dichtwulst des Verbindungsabschnittes 8 der Dichtungsanordnung 7 der Gasdiffusionseinheit 1 und die weitere Dichtwulst 14 der weiteren Gasdiffusionsschicht 12 liegen dichtend an der katalysatorbeschichteten Membran 13 an. Die katalysatorbeschichtete Membran 13 ist dabei lediglich kraftschlüssig zwischen der Gasdiffusionseinheit 1 und der Gasdiffusionsschicht 12 gehalten.

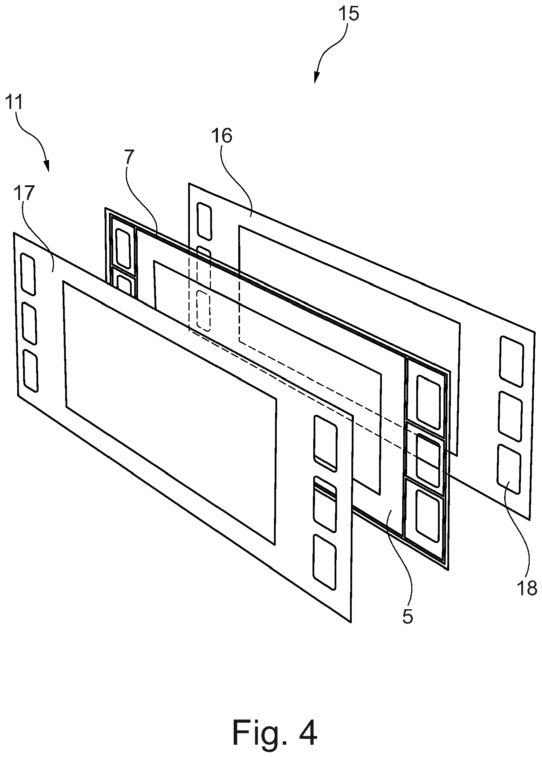

Figur 4 zeigt eine Anordnung 15 für eine Brennstoffzelle. Die Anordnung 15 umfasst eine Membran-Elektroden-Einheit 11 gemäß Figur 3, welche zwischen zwei Bipolarplatten 16, 17 angeordnet ist. Die Bipolarplatten 16, 17 sind flächig aus einem graphithaltigen Werkstoff ausgebildet. Alternativ können die Bipolarplatten 16, 17 auch aus einem metallischen Werkstoff ausgebildet sein. Die Bipolarplatten 16, 17 weisen in den den Gasdiffusionsschichten 3, 12 zugeordneten Bereichen eine Verteilstruktur zur Verteilung von Reaktionsmedium auf. Des Weiteren sind in die Bipolarplatten 16, 17 Kanäle 18 für den Transport von Reaktionsmedien und von Kühlmedien eingebracht.

Die auf beiden Hauptseiten 5, 6 des Trägersubstrats 4 angeordnete Dichtungsanordnung 7 gelangt zur Abdichtung der Kanäle 18 zur Anlage an den Bipolarplatten 16, 17.

## Patentansprüche

1. Membran-Elektroden-Einheit (11) für eine Brennstoffzelle, umfassend eine Gasdiffusionseinheit (1) mit einer flächig ausgebildeten Gasdiffusionsschicht (3), welche auf einem Trägersubstrat (4) angeordnet ist, wobei auf zumindest einer Hauptseite (5, 6) des Trägersubstrats (4) eine Dichtungsanordnung (7), wobei ein Verbindungsabschnitt (8) der Dichtungsanordnung (7) der umlaufenden Kante (9) der Gasdiffusionsschicht (3) zugeordnet ist, wobei der Verbindungsabschnitt (8) eine Dichtwulst ausbildet, wobei der Verbindungsabschnitt (8) die Gasdiffusionsschicht (3) stoffschlüssig an dem Trägersubstrat (4) fixiert sowie eine weitere Gasdiffusionsschicht (12) und eine katalysatorbeschichtete Membran (13), die zwischen Gasdiffusionseinheit (1) und der weiteren Gasdiffusionsschicht (12) angeordnet ist, wobei die weitere Gasdiffusionsschicht (12) entlang der umlaufenden Kante (9) mit einer weiteren Dichtwulst (14) versehen ist, **dadurch gekennzeichnet, dass** die Dichtwulst des Verbindungsabschnittes (8) und die weitere Dichtwulst (14) dichtend an der katalysatorbeschichteten Membran (13) anliegen.

2. Membran-Elektroden-Einheit nach Anspruch 1, **dadurch gekennzeichnet, dass** das Trägersubstrat (4) als Folie ausgebildet ist, wobei in die Folie Durchbrechungen (10) eingebracht sind.

3. Membran-Elektroden-Einheit nach Anspruch 1 oder 2, **dadurch gekennzeichnet, dass** auf beiden Hauptseiten (5, 6) des Trägersubstrats (4) eine Dichtungsanordnung (7) angeordnet ist.

4. Membran-Elektroden-Einheit nach Anspruch 2 oder 3, **dadurch gekennzeichnet, dass** die Dichtungsanordnung (7) eine Dichtwulst aufweist, welche Durchbrechungen (10) umgeben und/oder der Kante des Trägersubstrat (4) zugeordnet sind.

5. Membran-Elektroden-Einheit nach einem der Ansprüche 1 bis 4, **dadurch gekennzeichnet, dass** das Trägersubstrat (4) aus einem thermoplastischen Werkstoff ausgebildet ist.

6. Membran-Elektroden-Einheit nach einem der Ansprüche 1 bis 5, **dadurch gekennzeichnet, dass** die Dichtungsanordnung (7) aus spritzgießfähigem elastomerem Werkstoff ausgebildet ist.

7. Membran-Elektroden-Einheit nach einem der Ansprüche 1 bis 6, **dadurch gekennzeichnet, dass** die Gasdiffusionsschichten (3, 12) eine Matrix aus faserhaltigem Material aufweisen.

8. Anordnung (15) für eine Brennstoffzelle, umfassend eine Membran-Elektroden-Einheit (11) nach einem der Ansprüche 1 bis 7, welche zwischen zwei Bipolarplatten (16, 17) angeordnet ist, wobei die Bipolarplatten (16, 17) in den den Gasdiffusionsschichten (3, 12) zugeordneten Bereichen eine Verteilstruktur aufweisen und wobei in die Bipolarplatten (16, 17) Kanäle (18) für den Transport eingebracht sind.

9. Anordnung nach Anspruch 8, **dadurch gekennzeichnet, dass** auf beiden Hauptseiten (5, 6) des Trägersubstrats (4) eine Dichtungsanordnung (7) angeordnet ist, welche zur Abdichtung der Kanäle (18) zur Anlage an den Bipolarplatten (16, 17) gelangt.

## Claims

1. Membrane-electrode assembly (11) for a fuel cell, comprising a gas diffusion assembly (1) having a sheetlike gas diffusion layer (3) disposed on a carrier substrate (4), where on at least one main side (5, 6) of the carrier substrate (4) a sealing arrangement (7), where a connecting portion (8) of the sealing arrangement (7) is assigned to the surrounding edge (9) of the gas diffusion layer (3), where the connecting portion (8) forms a sealing bead, where the connecting portion (8) fastens the gas diffusion layer (3) with material bonding on the carrier substrate (4), and a further gas diffusion layer (12), and a catalyst-coated membrane (13) disposed between gas diffusion assembly (1) and the further gas diffusion layer (12), where the further gas diffusion layer (12) is provided along the surrounding edge (9) with a further sealing bead (14), **characterized in that** the sealing bead of the connecting portion (8) and the further sealing bead (14) sealingly abut the catalyst-coated membrane (13).

2. Membrane-electrode assembly according to Claim 1, **characterized in that** the carrier substrate (4) is configured as a film, where there are apertures (10) in the film.

3. Membrane-electrode assembly according to Claim 1 or 2, **characterized in that** a sealing arrangement (7) is disposed on both main sides (5, 6) of the carrier substrate (4).

4. Membrane-electrode assembly according to Claim 2 or 3, **characterized in that** the sealing arrangement (7) comprises a sealing bead which surround apertures (10) and/or are assigned to the edge of the carrier substrate (4).

5. Membrane-electrode assembly according to any of Claims 1 to 4, **characterized in that** the carrier substrate (4) is configured of a thermoplastic material.

6. Membrane-electrode assembly according to any of Claims 1 to 5, **characterized in that** the sealing arrangement (7) is configured of injection-mouldable elastomeric material.

7. Membrane-electrode assembly according to any of Claims 1 to 6, **characterized in that** the gas diffusion layers (3, 12) comprise a matrix of fibrous material.

8. Arrangement (15) for a fuel cell, comprising a membrane-electrode assembly (11) according to any of Claims 1 to 7 disposed between two bipolar plates (16, 17), where the bipolar plates (16, 17) in the regions assigned to the gas diffusion layers (3, 12) have a distributing structure and where there are transport channels (18) in the bipolar plates (16, 17).

9. Arrangement according to Claim 8, **characterized in that** a sealing arrangement (7) is disposed on both main sides (5, 6) of the carrier substrate (4) and to seal the channels (18) comes to abutment on the bipolar plates (16, 17) .

## Revendications

1. Unité membranes-électrodes (11) destinée à une pile à combustible, ladite unité comprenant une unité de diffusion de gaz (1) pourvue d'une couche de diffusion de gaz (3) sensiblement bidimensionnelle qui est disposée sur un substrat porteur (4), un ensemble d'étanchéité (7) situé sur au moins un côté principal (5, 6) du substrat porteur (4), une portion de liaison (8) de l'ensemble d'étanchéité (7) étant associée au bord circonférentiel (9) de la couche de diffusion de gaz (3), la portion de liaison (8) formant un renflement d'étanchéité, la portion de liaison (8) fixant la couche de diffusion de gaz (3) par une liaison de matière au substrat de support (4), ainsi qu'une autre couche de diffusion de gaz (12) et une membrane (13) revêtue de catalyseur, qui est disposée entre l'unité de diffusion de gaz (1) et l'autre couche de diffusion de gaz (12), l'autre couche de diffusion de gaz (12) étant pourvue d'un autre renflement d'étanchéité (14) le long du bord circonférentiel (9), **caractérisée en ce que** le renflement d'étanchéité de la portion de liaison (8) et l'autre renflement d'étanchéité (14) viennent en appui de manière étanche sur la membrane (13) revêtue de catalyseur.

2. Unité membranes-électrodes selon la revendication 1, **caractérisée en ce que** le substrat porteur (4) est conçu sous forme d'un film, des passages (10) étant ménagés dans le film.

3. Unité membranes-électrodes selon la revendication 1 ou 2, **caractérisée en ce qu'**un ensemble d'étanchéité (7) est disposé sur les deux côtés principaux (5, 6) du substrat porteur (4).

4. Unité membranes-électrodes selon la revendication 2 ou 3, **caractérisée en ce que** l'ensemble d'étanchéité (7) comporte un renflement d'étanchéité, des passages (10) entourant ledit renflement d'étanchéité et/ou étant associés au bord du substrat porteur (4).

5. Unité membranes-électrodes selon l'une des revendications 1 à 4, **caractérisée en ce que** le substrat porteur (4) est réalisé à partir d'une matière thermoplastique.

6. Unité membranes-électrodes selon l'une des revendications 1 à 5, **caractérisée en ce que** l'ensemble d'étanchéité (7) est réalisé à partir d'une matière élastomère moulable par injection.

7. Unité membranes-électrodes selon l'une des revendications 1 à 6, **caractérisée en ce que** les couches de diffusion de gaz (3, 12) comportent une matrice en matière fibreuse.

8. Ensemble (15) destiné à une pile à combustible, ledit ensemble comprenant une unité membranes-électrodes (11) selon l'une des revendications 1 à 7 qui est disposée entre deux plaques bipolaires (16, 17), les plaques bipolaires (16, 17) comportant une structure de répartition dans les zones associées aux couches de diffusion de gaz (3, 12) et des conduits (18) destinés au transport étant ménagés dans les plaques bipolaires (16, 17).

9. Ensemble selon la revendication 8, **caractérisé en ce qu'**un ensemble d'étanchéité (7), qui vient en appui sur les plaques bipolaires (16, 17) afin de réaliser l'étanchéité des conduits (18), est disposé sur les deux côtés principaux (5, 6) du substrat porteur (4).
